# EUROPÄISCHE PATENTSCHRIFT

(11) **EP 0 855 849 B1**
(45) Veröffentlichungstag und Bekanntmachung des Hinweises auf die Patenterteilung: **28.08.2002**
(21) Anmeldenummer: 97120300.5
(22) Anmeldetag: 19.11.1997
(51) Int. Cl.: H05B 39/04

(54) **Elektronischer Transformator**
Electronic transformer
Transformateur électronique

(30) Priorität: 23.01.1997 DE 19702343
(43) Veröffentlichungstag der Anmeldung: 29.07.1998
(73) Patentinhaber: TridonicAtco GmbH & Co. KG, 6851 Dornbirn (AT)
(72) Erfinder: Johler, Günther, 6900 Bregenz (AT); Spechtenhauser, Reinhard, 6845 Hohenems (AT)
(74) Vertreter: Schmidt-Evers, Jürgen, Dipl.-Ing.

(56) Entgegenhaltungen:
- EP-A- 0 707 435
- WO-A-87/02532
- DE-A- 3 328 659
- DE-A- 4 418 886
- DE-A- 19 500 615
- GB-A- 2 293 739
- US-A- 4 463 286

## Beschreibung

Die vorliegende Erfindung betrifft einen elektronischen Transformator zum Betreiben einer Last, insbesondere zum Betreiben von Niedervolt-Glühlampen, nach dem Oberbegriff des Anspruches 1.

Ein derartiger als getaktete Stromversorgung für die angeschlossene Last dienender elektronischer Transformator ist beispielsweise aus der EP-B1-0 264 765 bekannt. Der elektronische Transformator umfaßt eine Schaltvorrichtung mit einem oder mehreren getakteten Schaltern, wobei die Schaltvorrichtung in der Regel als Gegentaktwandler in Halb- oder Vollbrückenschaltung realisiert ist. Durch schnelles Schalten der Schalter der Schaltvorrichtung wird die Eingangsspannung der Schaltvorrichtung, die beispielsweise der gleichgerichteten Netzspannung entspricht, in eine hochfrequente Wechselspannung umgewandelt. Mit der Schaltvorrichtung ist ein Übertrager verbunden, der die von der Schaltvorrichtung gelieferte Ausgangsspannung in eine Betriebsspannung für die angeschlossene Last umwandelt. Aufgrund des schnellen Schaltens der Schalter können insbesondere zwischen der Schaltvorrichtung bzw. den Anschlußleitungen der Sekundärwicklungen des Übertragers und Erde Gleichtakt-Störströme auftreten, die über parasitäre Kapazitäten fließen. Diese Gleichtakt-Störströme können teilweise durch ein in den Netzleitungen vorgesehenes Eingangsfilter unterdrückt werden, welches beispielsweise durch eine stromkompensierte Drossel realisiert werden kann. Mithilfe einer derartigen stromkompensierten Drossel können wegen der hohen Induktivität der Drossel hochfrequente Gleichtakt-Störströme ausgefiltert werden. Die Wirkung einer derartigen stromkompensierten Drossel ist jedoch beschränkt, da dem kompakten Aufbau der Drossel Grenzen gesetzt sind. So kann durch unmittelbar benachbarte Bauteile und deren Störsignale die Filterwirkung der stromkompensierten Drossel vermindert werden. Daher ist gemäß der EP-B1-0 264 765 zusätzlich eine Hochfrequenz-Kurzschlußschaltung vorgesehen, die die Sekundärseite des Übertragers mit einem Pol des eingangsseitigen Gleichrichters verbindet. Diese Hochfrequenz-Kurzschlußschaltung weist einen Kondensator auf, wodurch Gleichtakt-Störströme, die durch parasitäre Kapazitäten zwischen der Primär- und Sekundärwicklung des Übertragers in die Lampenzuleitungen eingekoppelt werden, teilweise kurzgeschlossen werden. Die Potentiale der beiden Pole der Sekundärseite des Übertragers sind jedoch im allgemeinen asymmetrisch bezüglich des Erdpotentials, so daß die entsprechend auftretenden gegenphasigen Potentialänderungen unterschiedliche Amplituden aufweisen. Dadurch entsteht ein unerwünschter Gesamt-Gleichtakt-Störstrom.

In der EP-A2-0 707 435 wurde daher vorgeschlagen, die aus der EP-B1-0 264 765 bekannte Schaltung durch ein Symmetriernetzwerk aus passiven Bauelementen zu ergänzen, welches zwischen der Sekundärseite des Übertragers und der Kurzschlußschaltung geschaltet ist, wobei das Symmetriernetzwerk mit den beiden Polen der Sekundärwicklung des Übertragers einerseits und mit der Hochfrequenz-Kurzschlußschaltung andererseits verbunden ist. Insbesondere wird als Symmetriernetzwerk ein RC-Netzwerk verwendet. Der Vorteil dieses Symmetriernetzwerkes soll eine bessere Symmetrierung der Potentiale der beiden Pole der Sekundärwicklung des Übertragers -gegenüber Erde sein.

Durch das Hinzufügen des Symmetriernetzwerkes wird jedoch der Schaltungsaufbau des elektronischen Transformators nicht nur komplizierter und umfangreicher, sondern es steigen auch die Herstellungskosten dieses elektronischen Transformators.

Der vorliegenden Erfindung liegt daher die Aufgabe zugrunde, einen elektronischen Transformator gemäß dem Oberbegriff des Anspruches 1 derart weiterzubilden, daß wie bei der EP-A2-0 707 435 Unsymmetrieen zwischen den beiden Polen der Sekundärseite des Übertragers vermieden werden, so daß kein unerwünschter Gleichtakt-Störstrom fließen kann, wobei die erfindungsgemäße Transformatorschaltung jedoch billiger, einfacher und insbesondere mit weniger Bauteilen realisierbar sein soll.

Erfindungsgemäß ist diese Aufgabe durch einen elektronischen Transformator nach Anspruch 1 erfüllt.

Gemäß der vorliegenden Erfindung ist, wie in der EP-B1-0-264 765 und der EP-A2-0 707 435, eine Kurzschlußschaltung vorgesehen, die die Sekundärseite des Übertragers des elektronischen Transformators mit einem bestimmten Bezugspotential wechselstrommäßig kurzschließt. Im Gegensatz zu dem bekannten Stand der greift jedoch die Kurzschlußschaltung nicht an den Anschlußleitungen der Sekundärwicklung des Übertragers an, sondern ist mit einem Mittelabgriff mindestens einer Sekundärwicklung des Übertragers verbunden. Durch diese einfache schaltungstechnische Maßnahme kann eine bessere Symmetrierung der Potentiale der beiden sekundärseitigen Pole des Übertragers gegenüber Erde erzielt werden, so daß sich die beiden Potentiale der Sekundärseite des Übertragers zueinander gegenphasig im Takt der als selbstschwingender Wechselrichter ausgebildeten Schaltvorrichtung mit annähernd gleicher Amplitude gegenüber Erde verändern. Der Gesamt-Gleichtakt-Störstrom wird durch diese Maßnahme eliminiert, da sich die beiden zueinander gegenphasigen Gleichtakt-Störstrome, die von den beiden Polen der Sekundärseite des Übertragers und den damit verbundenen Lampenzuleitungen jeweils über parasitäre Kapazitäten zur Bezugserde fließen, kompensieren.

Zur Verringerung von Verlusten kann der Übertrager mit zwei oder mehreren parallel geschalteten Sekundärwicklungen realisiert sein, wobei erfindungsgemäß die Kurzschlußschaltung nur mit einem oder mehreren Mittelabgriffen der einzelnen Sekundärwicklungen des Übertragers verbunden sein kann. Das Bezugspotential, mit dem der andere Anschluß der Kurzschlußschaltung verbunden ist, kann beispielsweise das an einem Ausgangsanschluß des Gleichrichters des elektronischen Transformators auftretende Potential, das zwischen dem Eingangsfilter und dem Gleichrichter anliegende Potential, das zwischen den beiden Schaltern des Wechselrichters anliegende Potential oder das zwischen den beiden Brückenkondensatoren des Wechselrichters auftretende Potential sein.

Die Unteransprüche beschreiben vorteilhafte Ausgestaltungen der vorliegenden Erfindung.

Die Erfindung wird nachfolgend anhand bevorzugter Ausführungsbeispiele unter Bezugnahme auf die Zeichnung näher beschrieben.
- Fig. 1: zeigt drei unterschiedliche Anschlußmöglichkeiten der Hochfrequenz-Kurzschlußschaltung mit einer Sekundärwicklung bzw. zwei Sekundärwicklungen des Übertragers in einem elektronischen Transformators gemäß der vorliegenden Erfindung,
- Fig. 2: zeigt ein erster Ausführungsbeispiel des erfindungsgemäßen elektronischen Transformators,
- Fig. 3: zeigt ein zweites Ausführungsbeispiel des erfindungsgemäßen elektronischen Transformators,
- Fig. 4: zeigt ein drittes Ausführungsbeispiel des erfindungsgemäßen Transformators,
- Fig. 5: zeigt ein viertes Ausführungsbeispiel des erfindungsgemäßen Transformators, und
- Fig. 6: zeigt ein fünftes Ausführungsbeispiel des erfindungsgemäßen-elektronischen Transformators.

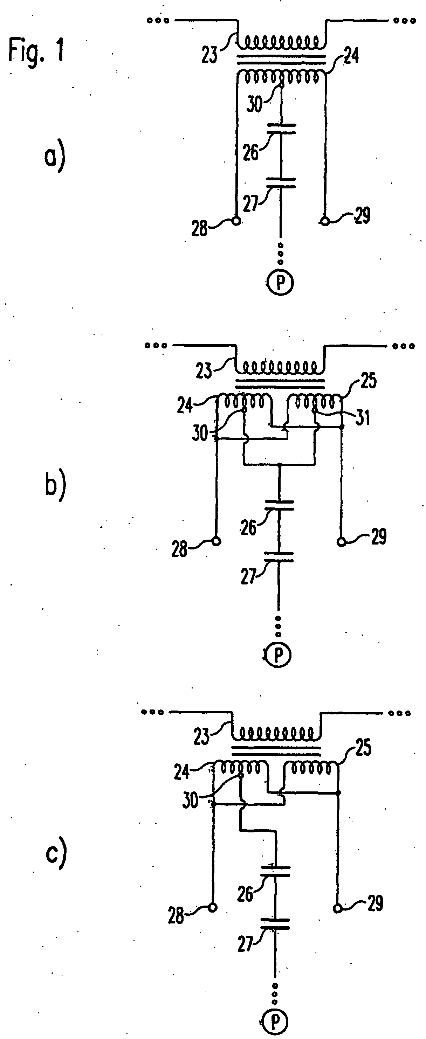

Nachfolgend wird zunächst das der vorliegenden Erfindung zugrundeliegende Prinzip anhand Figur 1 erläutert. Wie noch näher beschrieben wird, weist der elektronische Transformator gemäß der vorliegenden Erfindung einen Übertrager 23, insbesondere einen Leistungsübertrager auf, der die von der zuvor beschriebenen Schaltvorrichtung gelieferte hochfrequente Ausgangswechselspannung in eine Betriebsspannung für die anzuschließende Last, welche insbesondere eine Niedervolt-Glühlampe sein kann, umwandelt. Die Primärseite dieses Übertragers 23 ist mit der Ausgangsseite der Schaltvorrichtung, die in der Regel als selbstschwingender Wechselrichter mit zwei alternierend geschalteten Schaltern realisiert ist, verbunden. Die Sekundärseite 24 des Übertragers ist mit zwei Anschlüssen 28 und 29 verbunden, an die eine oder mehrere Niedervolt-Glühlampen'anschließbar sind. In Figur 1a weist der Übertrager lediglich eine Sekundärwicklung 24 auf, welche in ihrer Mitte einen Mittelabgriff 30 besitzt. An diesen Mittelabgriff 30 ist die zuvor beschriebene Hochfrequenz-Kurzschlußschaltung, bestehend aus zwei in Serie geschalteten Kondensatoren 26 und 27, angeschlossen. Die Hochfrequenz-Kurzschlußschaltung hat die Aufgabe, den Mittelabgriff 30 der Sekundärwicklung 24 mit einem bestimmten Bezugspotential P wechselstrommäßig zu verbinden, d.h. kurzzuschließen. Die Hochfrequenz-Kurzschlußschaltung kann daher durch jede Bauteilkombination realisiert werden, mit der ein wechselstrommäßiger Kurzschluß erzielbar ist. Insbesondere kann die Hochfrequenz-Kurzschlußschaltung auch lediglich einen Kondensator aufweisen. Aus Gründen der Redundanz werden jedoch erfindungsgemäß vorteilhafterweise zwei in Serie geschaltete Kondensatoren 26 und 27 gleicher Kapazität verwendet. Kommt es zu einem internen Kurzschluß eines der beiden Kondensatoren, so sind zum Schutz einer Bedienperson weiterhin die Lampenanschlüsse 28 und 29 von der Netzspannung getrennt.

Aus Figur 1a ist ersichtlich, daß durch die einfache erfindungsgemäße schaltungstechnische Maßnahme eine bessere Symmetrierung der Potentiale der beiden Pole der Sekundärwicklung 24 des Übetragers gegenüber der Bezugserde erzielt werden kann, so daß sich die Potentiale der beiden sekundärseitigen Pole des Übertragers zueinander gegenphasig im Takt des vorgeschalteten Wechselrichters mit annähernd gleicher Amplitude verändern. Die beiden zueinander gegenphasig verlaufenden Gleichtakt-Störströme, die von den beiden Polen der Sekundärwicklung 24 des Übertragers und den damit verbundenen Lampenzuleitungen jeweils über parasitäre Kapazitäten zur Erde bzw. zur Umgebung, fließen, werden somit vollständig kompensiert.

Figur 1b zeigt eine weitere Möglichkeit des Anschlusses der Hochfrequenz-Kurzschlußschaltung gemäß der vorliegenden Erfindung an die Sekundärseite des Übertragers, wenn der Übertrager zwei Sekundärwicklungen 24 und 25 aufweist. Zwei parallelgeschaltete Sekundärwicklungen 24 und 25 sind insbesondere vorteilhaft, um die durch den Übertrager hervorgerufenen Verluste aufgrund der Parallelschaltung der Sekundärwicklungen zu verringern. In diesem Fall weist jede der beiden Sekundärwicklungen 24 und 25 einen Mittelabgriff 30 bzw. 31 auf, der jeweils mit der Kurzschlußschaltung, bestehend aus den zwei Kondensatoren 26 und 27, verbunden ist.

Wie abschließend in Figur 1c dargestellt, kann jedoch auch lediglich eine der beiden Sekundärwicklungen einen Mittelabgriff aufweisen, der mit der Kurzschlußschaltung zu verbinden ist. Selbstverständlich lassen sich die in Figur 1b und 1c dargestellten Anschlußmöglichkeiten der Kurzschlußschaltung auch auf Ausgestaltungen des Übertragers mit mehr als zwei Sekundärwicklungen anwenden.

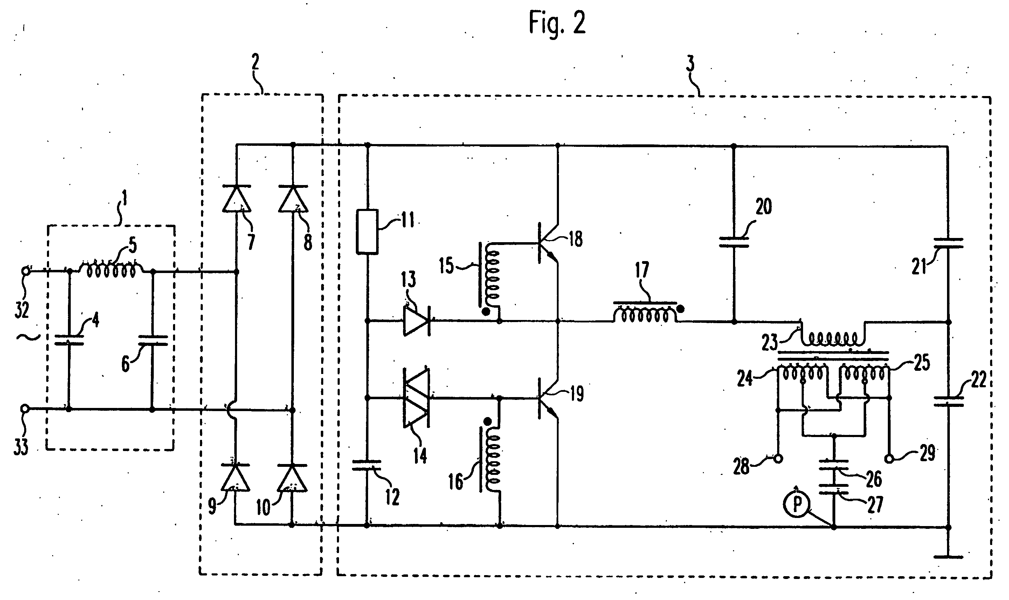

Nachfolgend wird anhand der in Figur 2-6 gezeigten Ausführungsbeispiele der Aufbau des erfindungsgemäßen elektronischen Transformators beschrieben, wobei jede der in Figur 1a-c gezeigten Anschlußmöglichkeiten der Kurzschlußschaltung an die Sekundärseite des Übertragers in dem erfindungsgemäßen elektronischen Transformator realisiert sein kann. Der Einfachheit halber ist jedoch in jedem der in Figur 2-6 gezeigten Ausführungsbeispiele die in Figur 1c gezeigte Anschlußmöglichkeit realisiert, d.h. der Übertrager des elektronischen Transformators weist jeweils zwei parallelgeschaltete Sekundärwicklungen mit jeweils zwei entsprechenden Mittelabgriffen auf, wobei die beiden Mittelabgriffe der beiden Sekundärwicklungen 24 und 25 mit der Kurzschlußschaltung verbunden sind.

Figur 2 zeigt ein erstes Ausführungsbeispiel des erfindungsgemäßen elektronischen Transformators zum Betreiben einer Niedervolt-Halogenglühlampe. Der elektronische Transformator empfängt an seinem Eingangsanschlüssen 32 und 33 eine Netzwechselspannung, die zunächst einem Eingangsfilter 1, bestehend aus einem LC-Netzwerk mit Kondensatoren 4, 6 und einer Spule 5, zugeführt und dort geglättet wird. Die geglättete Netzwechselspannung wird anschließend einem Gleichrichter 2 mit vier zu einer Diodenvollbrücke verschalteten Dioden 7-10 zugeführt, so daß der Gleichrichter 2 eine der Netzspannung entsprechende pulsierende Gleichspannung an die eigentliche Schaltvorrichtung 3 des elektronischen Transformators abgibt. Die Schaltvorrichtung 3 ist insbesondere als selbstschwingender Wechselrichter ausgestaltet, der zwei zu einer Halbbrücke verschaltete alternierend angesteuerte Schaltelemente 18 und 19 sowie entsprechend vorgesehene Brückenkondensatoren 21 und 22 enthält. Die beiden Schaltelemente 18 und 19, die insbesondere durch MOS-Feldeffekttransistoren realisiert sein können, werden jeweils eingangsseitig von einer Sekundärwicklung 15 bzw. 16 eines Rückkopplungsübertragers angesteuert, dessen Primärwicklung 17 im Lastkreis des Wechselrichters liegt. Die beiden Transistoren 18 und 19 werden abwechselnd durch die an den Sekundärwicklungen 15 und 16 anliegenden Spannungen des Rückkopplungsübertragers geschaltet, so daß abwechselnd der Stromkreis über den Transistor 18 bzw. den Transistor 19, die Primärwicklung 17 des Rückkopplungsübertragers, den mit einem weiteren Kondensator 20 verbundenen Leistungsübertrager und die Brückenkondensatoren 21 und 22 geschlossen wird. Der Wechselrichter wird gestartet, indem nach Einschalten des elektronischen Transformators zunächst über einen Widerstand 11 ein eingangsseitiger Ladekondensator 12 des Wechselrichtes aufgeladen wird, bis die an dem Ladekondensator 12 anliegende Spannung die Zündspannung eines als Triggerelement vorgesehenen Diacs 14 erreicht hat. In diesem Fall schaltet der Diac 14 durch, so daß an der Basis des Transistors 19 ein Steuersignal anliegt und der Wechselrichter somit zum Schwingen angeregt wird. Während des Schwingens des Wechselrichters wird der Ladekondensator 12 über eine Diode 13 entladen. Neben der Primärwicklung 17 des Rückkopplungsübertragers befindet sich im Lastkreis des Wechselrichters auch die bereits in Figur 1a-c dargestellte Primärwicklung 23 des Leitungsübertragers, der die von dem Wechselrichter gelieferte hochfrequente Wechselspannung in eine geeignete Betriebsspannung für die an Anschlüsse 28 und 29 Niedervolt-Halogenglühlampe umwandelt. Wie bereits zuvor beschrieben, sind mit der Primärwicklung 23 zwei parallelgeschaltete Sekundärwicklungen 24 und 25 des Übertragers gekoppelt, die jeweils einen Mittelabgriff aufweisen, der mit einem Anschluß der Kurzschlußschaltung mit den beiden Kondensatoren 26 und 27 verbunden ist. Der andere Anschluß der Kurzschlußschaltung ist mit einem Hochfrequenz-Bezugspotential P verbunden, wobei in Figur 2 dieses Bezugspotential dem am unteren Pol des Gleichrichters 2 auftretenden Potential entspricht. Durch die Serienschaltung der beiden Kondensatoren 26 und 27 werden die Mittelabgriffe der beiden Sekundärspulen 24 und 25 des Übertragers mit dem unteren Pol des Gleichrichters 2 kurzgeschlossen, wodurch die über parasitäre Kapazitäten zwischen der Primärwicklung 23 und den Sekundärwicklungen 24 und 25 des Übertragers in die Lampenzuleitungen an den Anschlüssen 28 und 29 eingekoppelten Gleichtakt-Störströme kurzgeschlossen werden. Da die Kurzschlußschaltung über die entsprechend vorgesehenen Mittelabgriffe symmetrisch an den beiden Sekundärspulen 24 und 25 des Übertragers angreift, werden die Potentiale der beiden Pole der jeweiligen Sekundärspule gegenüber der Bezugserde symmetriert, so daß sich die beiden Potentiale jeder Sekundärspule zueinander gegenphasig im Takt des Wechselrichters mit annähernd gleicher Amplitude bezüglich Erde verändern. Dadurch wird, da sich die beiden zueinander gegenphasig verlaufenden Gleichtakt-Störströme der beiden Pole der Sekundärwicklungen 24, 25 kompensieren, der Gesamt-Gleichtakt-Störstrom vollständig eliminiert.

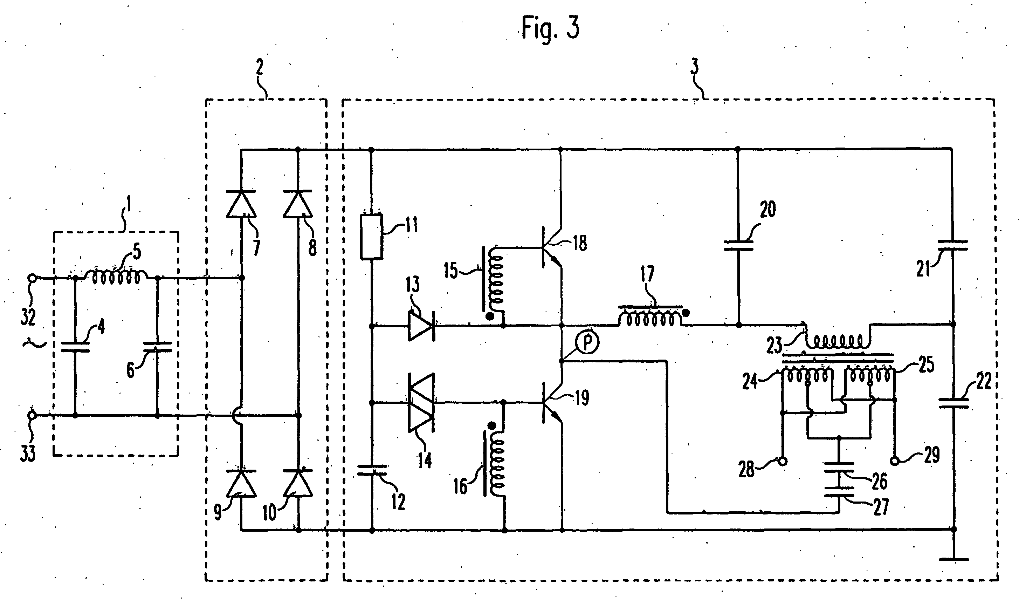

Figur 3 zeigt ein zweites Ausführungsbeispiel des erfindungsgemäßen elektronischen Transformators. Die den in Figur 2 gezeigten Bauteilen entsprechenden Bauteile des elektronischen Transformators sind mit identischen Bezugszeichen versehen, so daß auf eine wiederholte Beschreibung der Bauelemente verzichtet wird. Der in Figur 3 gezeigte elektronische Transformator unterscheidet sich von dem in Figur 2 gezeigten elektronischen Transformator lediglich dadurch, daß das Hochfrequenz-Bezugspotential P der die beiden Kondensatoren 26 und 27 umfassenden Kurzschlußschaltung dem an dem Verbindungspunkt zwischen den beiden alternierend angesteuerten Schaltern 18 und 19 auftretenden Potential entspricht.

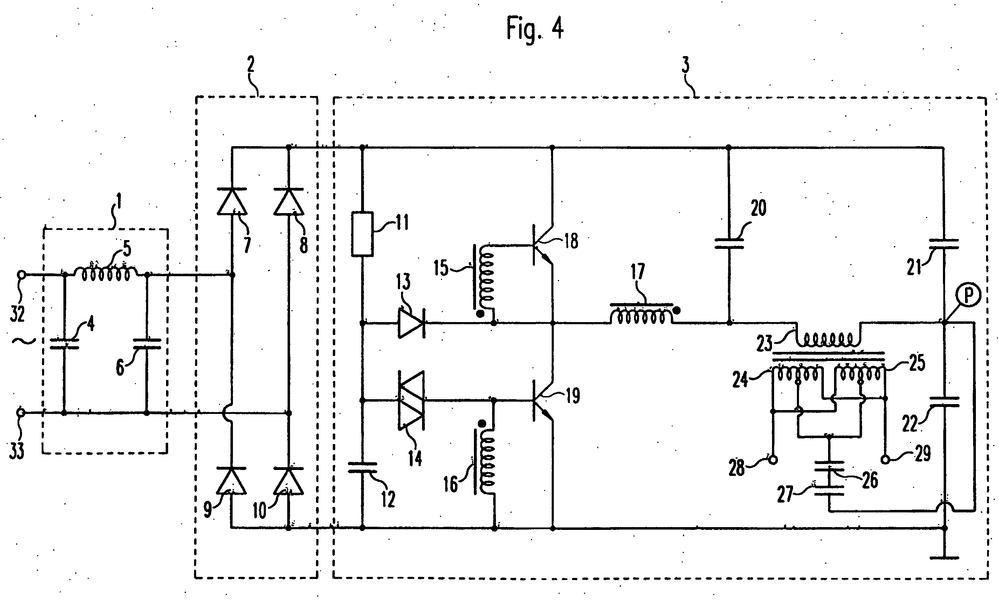

Figur 4 zeigt ein drittes Ausführungsbeispiel der vorliegenden Erfindung, wobei das Hochfrequenz-Bezugspotential P der Kurzschlußschaltung dem am Verbindungspunkt zwischen den beiden Brückenkondensatoren 21 und 22 auftretenden Potential entspricht.

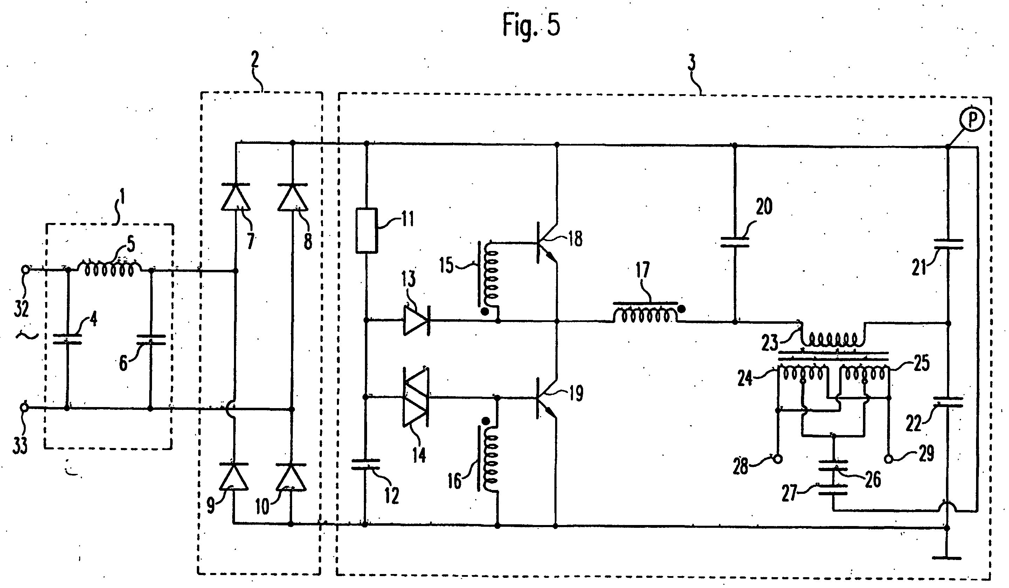

Figur 5 zeigt ein viertes Ausführungsbeispiel des erfindungsgemäßen elektronischen Transformators, wobei im Vergleich mit dem in Figur 2 gezeigten elektronischen Transformator die Kurzschlußschaltung mit dem oberen Pol des Gleichrichters verbunden ist.

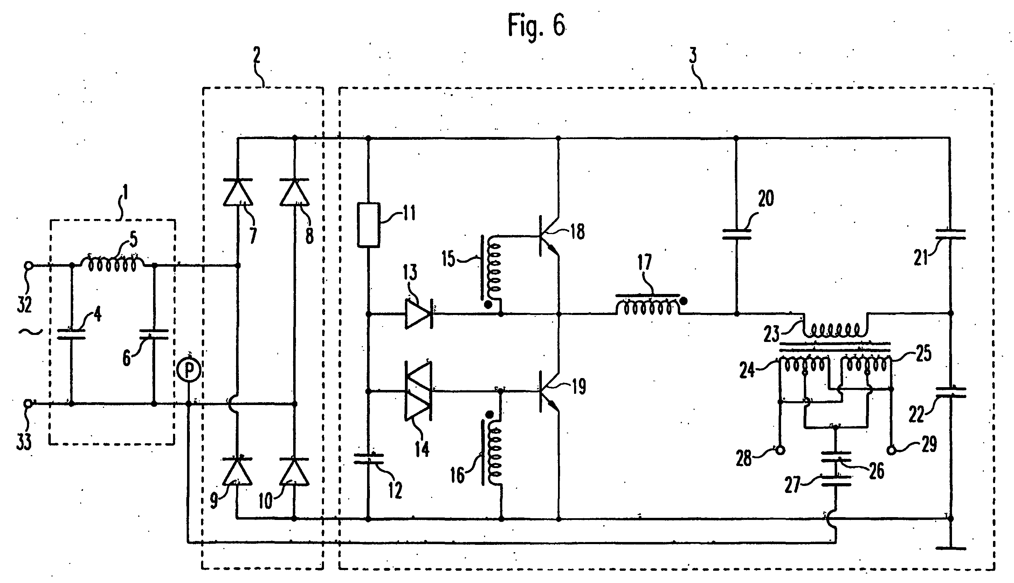

Abschließend zeigt Figur 6 ein fünftes Ausführungsbeispiel des erfindungsgemäßen elektronischen Transformators, wobei als Bezugspunkt für die Hochfrequenz-Kurzschlußschaltung ein Verbindungpunkt zwischen dem Eingangsfilter 1 und dem Gleichrichter 2 gewählt ist.

## Patentansprüche

1. Elektronischer Transformator zum Betreiben einer Last, insbesondere zum Betreiben mindestens einer Niedervolt-Glühlampe,
mit einer Schaltvorrichtung (3), die eine Eingangsspannung in eine hochfrequente Ausgangsspannung umwandelt,
mit einem Übertrager (23-25), der die Ausgangsspannung der Schaltvorrichtung (3) in eine Betriebsspannung für die Last umwandelt, und
mit einer Kurzschlußschaltung (26, 27), die die Sekundärseite (24, 25) des Übertragers mit einem Bezugspotential (P) wechselstrommäßig kurzschließt,
**dadurch gekennzeichnet,**
**daß** die Kurzschlußschaltung (26, 27) mit einem Mittelabgriff (30, 31) mindestens einer Sekundärwicklung (24, 25) des Übertragers verbunden ist.

2. Elektronischer Transformator nach Anspruch 1,
**dadurch gekennzeichnet,**
**daß** die Eingangsspannung eine von einem Gleichrichter (2) gelieferte Gleichspannung, insbesondere eine pulsierende Gleichspannung ist.

3. Elektronischer Transformator nach Anspruch 2,
**dadurch gekennzeichnet,**
**daß** zwischen einem Versorgungsspannungsanschluß (32, 33) des elektronischen Transformators und dem Gleichrichter (2) ein Eingangsfilter (1) angeordnet ist.

4. Elektronischer Transformator nach einem der vorhergehenden Ansprüche,
**dadurch gekennzeichnet,**
**daß** die Schaltvorrichtung (3) ein Wechselrichter mit zwei alternierend schaltenden Schaltelementen (18, 19) ist.

5. Elektronischer Transformator nach Anspruch 4,
**gekennzeichnet durch**
einen Rückkopplungsübertrager (15-17), dessen Primärwicklung (17) im Lastkreis des Wechselrichters (3) liegt und der zwei Sekundärwicklungen (15, 16) umfaßt, die jeweils einen der beiden Schaltelemente (18, 19) ansteuern.

6. Elektronischer Transformator nach Anspruch 5,
**dadurch gekennzeichnet,**
**daß** die Primärwicklung (17) des Rückkopplungsübertragers mit einer Primärwicklung (23) des Übertragers (23-25) verbunden ist.

7. Elekronischer Transformator nach einem der Ansprüche 4-6,
**dadurch gekennzeichnet,**
**daß** die beiden Schalter (18, 19) jeweils über einen Kondensator (21, 22) mit der Primärwicklung (23) des Übertragers (23-25) verbund sind.

8. Elektronischer Transformator nach einem der Ansprüche 4-7,
**dadurch gekennzeichnet,**
**daß** die Schaltelemente (18, 19) MOS-Feldeffekttransistoren sind.

9. Elektronischer Transformator nach einem der vorhergehenden Ansprüche,
**dadurch gekennzeichnet,**
**daß** der Übertrager nur eine'Sekundärwicklung (24) aufweist.

10. Elektronischer Transformator nach einem der Ansprüche 1-8,
**dadurch gekennzeichnet,**
**daß** der Übertrager (23-25) mindestens zwei parallelgeschaltete Sekundärwicklungen (24, 25) aufweist.

11. Elektronischer Transformator nach Anspruch 10,
**dadurch gekennzeichnet,**
**daß** die Kurzschlußschaltung (26, 27) lediglich mit einem Mittelabgriff (30, 31) -einer der mindestens zwei Sekundärwicklungen (24, 25) des Übertragers verbunden ist.

12. Elektronischer Transformator nach Anspruch 10,
**dadurch gekennzeichnet,**
**daß** die Kurzschlußschaltung (26, 27), mit jeweils einem Mittelabgriff (30, 31) jeder der mindestens zwei Sekundärwicklungen (24, 25) des Übertragers verbunden ist.

13. Elektronischer Transformator nach einem der vorhergehenden Ansprüche,
**dadurch gekennzeichnet,**
**daß** die Kurzschlußschaltung einen oder mehrere in Serie geschaltete Kondensatoren (26, 27) umfaßt.

14. Elektronischer Transformator nach einem der vorhergehenden Ansprüche und Anspruch 2,
**dadurch gekennzeichnet,**
**daß** das Bezugspotential (P) dem an einen Ausgangsanschluß des Gleichrichters (2) anliegenden Potential entspricht.

15. Elektronischer Transformator nach einem der Ansprüche 1-13 und Anspruch 3,
**dadurch gekennzeichnet,**
**daß** das Bezugspotential (P) dem an einem Verbindungspunkt zwischen dem Eingangsfilter (1) und dem Gleichrichter (2) anliegenden Potential entspricht.

16. Elektronischer Transformator nach einem der Ansprüche 1-13 und einem der Ansprüche 4-8,
**dadurch gekennzeichnet,**
**daß** das Bezugspotential (P) dem an einem Verbindungspunkt zwischen den beiden Schaltelementen (18, 19) des Wechselrichters (3) anliegenden Potential entspricht.

17. Elektronischer Transformator nach einem der Ansprüche 1-13 und Anspruch 6,
**dadurch gekennzeichnet,**
**daß** das Bezugspotential (P) dem an einem Verbindungspunkt zwischen den beiden Kondensatoren (21, 22) anliegenden Potential entspricht.

## Claims

1. Electronic transformer for operating a load, in particular for operating at least one low-voltage incandescent lamp,
having a switching device (3) which transforms an input voltage to a high-frequency output voltage,
having a transformer (23-25) which transforms the output voltage of the switching device (3) into an operating voltage for the load, and
having short-circuit circuitry (26, 27) which short-circuits, in terms of a.c., the secondary side (24, 25) of the transformer with a reference potential (P),
**characterized in that**,
the short-circuit circuitry (26, 27) is connected with a middle tap (30, 31) of at least one secondary winding (24, 25) of the transformer.

2. Electronic transformer according to claim 1,
**characterized in that**,
the input voltage is a d.c. voltage delivered by a rectifier (2), in particular a pulsed d.c. voltage.

3. Electronic transformer according to claim 2,
**characterized in that**,
an input filter (1) is arranged between a supply voltage terminal (32, 33) of the electronic transformer and the rectifier (2).

4. Electronic transformer according to any preceding claim,
**characterized in that**,
the switching device (3) is an inverter having two alternatingly switching switch elements (18, 19).

5. Electronic transformer according to claim 4,
**characterized by**
a feed-back transformer (15-17), the primary winding (17) of which is in the load circuit of the inverter (3) and which includes two secondary windings (15, 16) which each control one of the two switching elements (18, 19).

6. Electronic transformer according to claim 5,
**characterized in that**,
the primary winding (17) of the feed-back transformer is connected with a primary winding (23) of the transformer (23-25).

7. Electronic transformer according to any of claims 4 to 6,
**characterized in that**,
the two switches (18, 19) are connected each via a capacitor (21, 22) with the primary winding (23) of the transformer (23-25).

8. Electronic transformer according to any of claims 4 to 7,
**characterized in that**,
the switching elements (18, 19) are MOS field effect transistors.

9. Electronic transformer according to any preceding claim,
**characterized in that**,
the transformer has only one secondary winding (24).

10. Electronic transformer according to any of claims 1 to 8,
**characterized in that**,
the transformer (23-25) has at least two parallel-connected secondary windings (24, 25).

11. Electronic transformer according to claim 10,
**characterized in that**,
the short-circuit circuitry (26, 27) is connected solely with a middle tap (30, 31) of one of the at least two secondary windings (24, 25).

12. Electronic transformer according to claim 10,
**characterized in that**,
the short-circuit circuitry (26, 27) is connected with respective middle taps (30, 31) of each of the at least two secondary windings (24, 25).

13. Electronic transformer according to any preceding claim,
**characterized in that**,
the short-circuit circuitry includes one or more series-connected capacitors (26, 27).

14. Electronic transformer according to any preceding claim and claim 2,
**characterized in that**,
the reference potential (P) corresponds to the potential at one output terminal at the rectifier (2).

15. Electronic transformer according to any of claims 1 to 13 and claim 3,
**characterized in that**,
the reference potential (P) corresponds to the potential at a connection point between the input filter (1) and the rectifier (2).

16. Electronic transformer according to any of claims 1 to 13 and any of claims 4 to 8,
**characterized in that**,
the reference potential (P) corresponds to the potential at a connection point between the two switching elements (18, 19) of the inverter (3).

17. Electronic transformer according to any of claims 1 to 13 and claim 6,
**characterized in that**,
the reference potential (P) corresponds to the potential at a connection point between the two capacitors (21, 22).

## Revendications

1. Transformateur électronique pour le fonctionnement d'une charge, en particulier pour le fonctionnement d'au moins une ampoule à basse tension,
avec un dispositif de commutation (3), qui convertit une tension d'entrée en une tension de sortie à haute fréquence,
avec un transformateur (23-25), qui convertit la tension de sortie du dispositif de commutation (3) en une tension de service pour la charge et
avec un montage de court-circuit (26, 27), qui court-circuite au niveau du courant alternatif le côté secondaire (24, 25) du transformateur avec un potentiel de référence (P),
**caractérisé**
**en ce que** le montage de court-circuit (26, 27) est relié à une prise médiane (30, 31) d'au moins un enroulement secondaire (24, 25) du transformateur.

2. Transformateur électronique selon la revendication 1,
**caractérisé**
**en ce que** la tension d'entrée est une tension continue fournie par un redresseur (2), en particulier une tension continue pulsatoire.

3. Transformateur électronique selon la revendication 2,
**caractérisé**
**en ce qu'**un filtre d'entrée (1) est disposé entre un branchement de tension d'alimentation (32, 33) du transformateur électronique et le redresseur (2).

4. Transformateur électronique selon l'une quelconque des revendications précédentes,
**caractérisé**
**en ce que** le dispositif de commutation (3) est un onduleur avec deux éléments de commutation (18, 19) commutant en alternance.

5. Transformateur électronique selon la revendication 4,
**caractérisé par**
un transformateur à réinjection (15-17) dont l'enroulement primaire (17) est disposé dans le circuit de charge de l'onduleur (3) et qui comprend deux enroulements secondaires (15, 16), qui amorcent chacun l'un des deux éléments de commutation (18, 19).

6. Transformateur électronique selon la revendication 5,
**caractérisé**
**en ce que** l'enroulement primaire (17) du transformateur à réinjection est relié à un enroulement primaire (23) du transformateur (23-25).

7. Transformateur électronique selon l'une quelconque des revendications 4-6,
**caractérisé**
**en ce que** les deux interrupteurs (18, 19) sont reliés chacun par un condensateur (21, 22) à l'enroulement primaire (23) du transformateur (23-25).

8. Transformateur électronique selon l'une quelconque des revendications 4 à 7,
**caractérisé**
**en ce que** les éléments de commutation (18, 19) sont des transistors à effet de champ MOS.

9. Transformateur électronique selon l'une quelconque des revendications précédentes,
**caractérisé**
**en ce que** le transformateur présente seulement un enroulement secondaire (24).

10. Transformateur électronique selon l'une quelconque des revendications 1 à 8,
**caractérisé**
**en ce que** le transformateur (23-25) présente au moins deux enroulements secondaires (24, 25) montés en parallèle.

11. Transformateur électronique selon la revendication 10,
**caractérisé**
**en ce que** le montage de court-circuit (26, 27) est relié uniquement à une prise médiane (30, 31) de l'un des au moins deux enroulements secondaires (24, 25) du transformateur.

12. Transformateur électronique selon la revendication 10,
**caractérisé**
**en ce que** le montage de court-circuit (26, 27) est relié à respectivement une prise médiane (30, 31) de chacun des au moins deux enroulements secondaires (24, 25) du transformateur.

13. Transformateur électronique selon l'une quelconque des revendications précédentes,
**caractérisé**
**en ce que** le montage de court-circuit comprend un ou plusieurs condensateurs (26, 27) montés en série.

14. Transformateur électronique selon l'une quelconque des revendications précédentes et la revendication 2,
**caractérisé**
**en ce que** le potentiel de référence (P) correspond au potentiel appliqué à un branchement de sortie du redresseur (2).

15. Transformateur électronique selon l'une quelconque des revendications 1 à 13 et la revendication 3,
**caractérisé**
**en ce que** le potentiel de référence (P) correspond au potentiel appliqué en un point de liaison entre le filtre d'entrée et le redresseur (2).

16. Transformateur électronique selon l'une quelconque des revendications 1 à 13 et l'une quelconque des revendications 4 à 8,
**caractérisé**
**en ce que** le potentiel de référence (P) correspond au potentiel appliqué en un point de liaison entre les deux éléments de commutation (18, 19) de l'onduleur (3).

17. Transformateur électronique selon l'une quelconque des revendications 1 à 13 et la revendication 6,
**caractérisé**
**en ce que** le potentiel de référence (P) correspond au potentiel appliqué en un point de liaison entre les deux condensateurs (21, 22).
